# EUROPÄISCHE PATENTSCHRIFT

(11) **EP 1 375 229 B1**
(45) Veröffentlichungstag und Bekanntmachung des Hinweises auf die Patenterteilung: **02.03.2011**
(21) Anmeldenummer: 03012472.1
(22) Anmeldetag: 31.05.2003
(51) Int. Cl.: B60K 17/04, B60K 17/16

(54) **Fahrzeugachse**
Vehicle axle
Essieu de véhicule

(30) Priorität: 17.06.2002 DE 10227027
(43) Veröffentlichungstag der Anmeldung: 02.01.2004
(60) Teilanmeldung: 08162991.7
(73) Patentinhaber: CLAAS Industrietechnik GmbH, 33106 Paderborn (DE)
(72) Erfinder: Engenhorst, Werner, 33428 Harsewinkel (DE); Loeneke, Markus, 33142 Büren (DE); Verhorst, Jan-Willem, 33142 Büren (DE)

(56) Entgegenhaltungen:
- EP-A- 1 207 071
- EP-A1- 0 076 465
- DE-A1- 2 216 677
- FR-A- 940 078
- FR-A- 2 063 735
- US-A- 3 403 746

## Beschreibung

Die Erfindung bezieht sich auf eine Fahrzeugachse unter anderem für selbstfahrende Erntemaschinen wie etwa Mähdrescher, nach dem Oberbegriff der Patentansprüche 1 und 7.
Bei den bekannten ungelenkten Antriebsachsen für Erntemaschinen (EP 698 338 B1 und DE-PS 15 55 953) wird die Antriebsleistung über ein Hauptgetriebe an die Radgetriebe übertragen. Das Hauptgetriebe ist vorwiegend im mittlerern Bereich des Achsrohrs an diesem angeflanscht oder in seiner Gesamtheit als tragendes Bauteil in die Antriebsachse integriert. Die beidseitig vom Hauptgetriebe ausgehenden Antriebswellen verlaufen entweder parallel zum Achsrohr oder koaxial innerhalb von diesem bis zu den seitlichen Radgetrieben. Diese sind an beiden Endbereichen des Achsrohrs in unmittelbarer Nähe der Laufräder angeordnet und werden dabei von den Felgen und den Reifen überdeckt. Die Verbindung der Antriebsachse mit dem Maschinenrahmen erfolgt an zwei Befestigungsstellen über Stützkonsolen, die in einem seitlichen Abstand neben den Radgetrieben angeordnet sind. Infolge dieser von den Radgetrieben entfernten Befestigung erfolgt eine ungünstige Einleitung der abzustützenden Last, sodass hohe Biegemomente auf die Radgetriebe einwirken. Aufgrund dieser Belastungen ist ein erheblicher Stabilisierungsaufwand für die Radgetriebe erforderlich. Dadurch ist eine weitaus größere Dimensionierung der Bauteile notwendig, als es für die reine Drehmomentübertragung notwendig ist.
Insbesondere betrifft dies die Lagerabmessungen und Wellendurchmesser, wodurch sich der Herstellungsaufwand entsprechend erhöht.

Der Erfindung liegt die Aufgabe zugrunde, das Verteilgetriebe und die Radgetriebe so auszuführen und anzuordnen, dass die auf die Getriebe einwirkenden Belastungen verringert und damit die erforderlichen Kosten für deren Herstellung gesenkt werden.
Erfindungsgemäß wird diese Aufgabe durch die in den Patentansprüchen 1 und 6 genannten Merkmale gelöst. Weitere vorteilhafte Ausführungen des Erfindungsgegenstandes ergeben sich aus den nachgeordneten Ansprüchen.
Die kompakte Bauweise der Antriebsachse mit den zugehörigen Getrieben ermöglicht eine beanspruchungsgerechte, stabile und zugleich kostengünstige Ausführung.

Die Erfindung wird nachstehend an einem Ausführungsbeispiel näher erläutert. In der zugehörigen Zeichnung zeigen
- Fig. 1: eine Seitenansicht des vorderen Bereiches eines Mähdreschers,

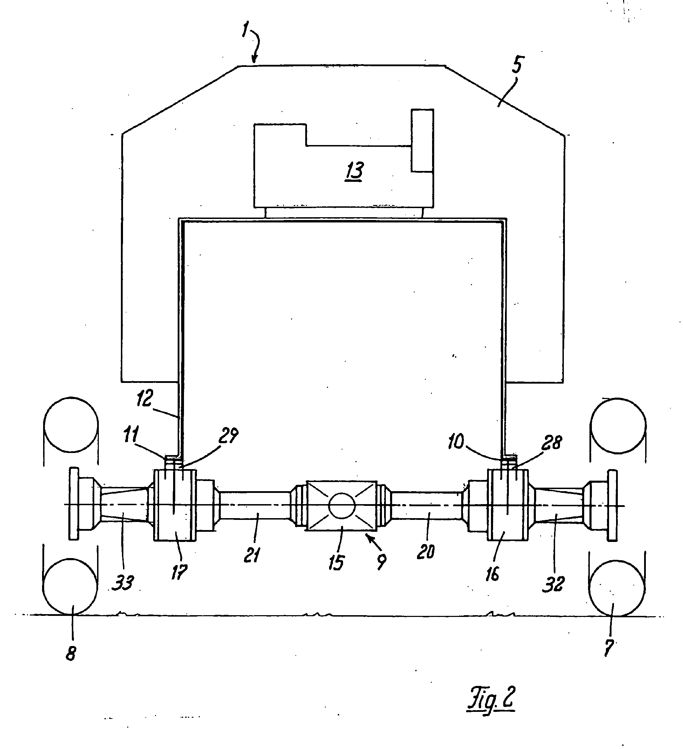

- Fig. 2: die Vorderansicht der Antriebsachse mit den Verbindungsstellen zum Maschinenrahmen,

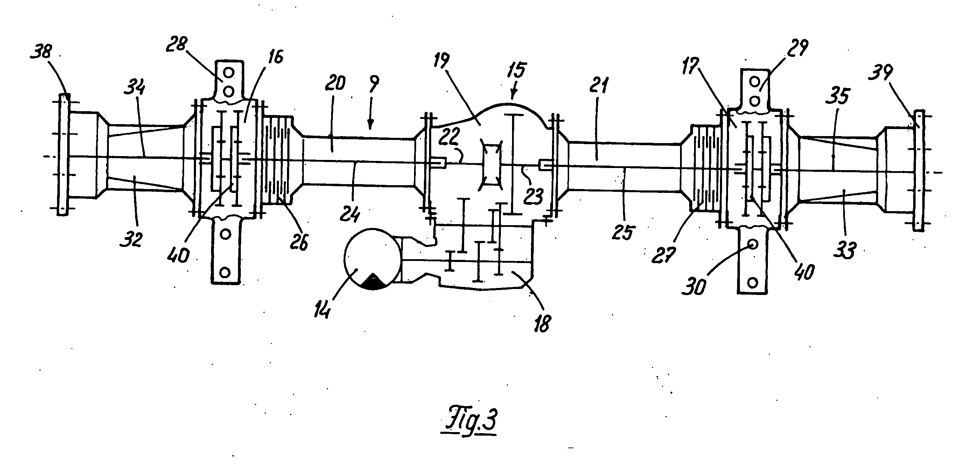

- Fig. 3: die Draufsicht auf die Antriebsachse in einer teilweisen Schnittdarstellung,

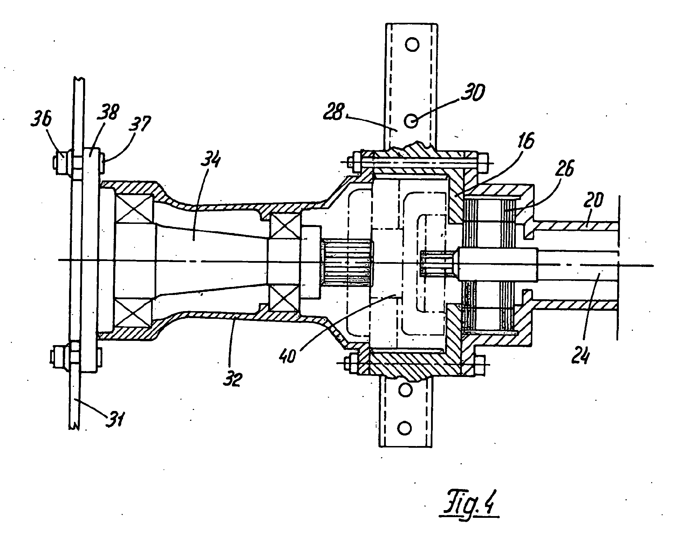

- Fig. 4: den seitlichen Achsbereich mit Radgetriebe und Tragzapfen in einer Schnittdarstellung,

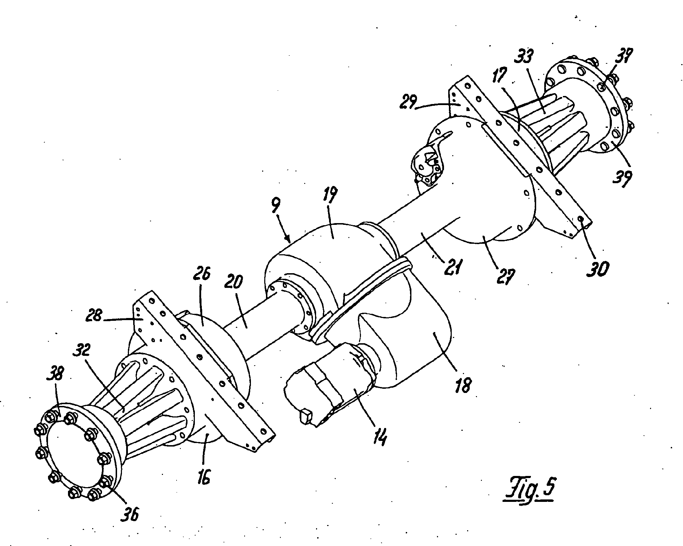

- Fig. 5: eine perspektivische Darstellung der Antriebsachse.

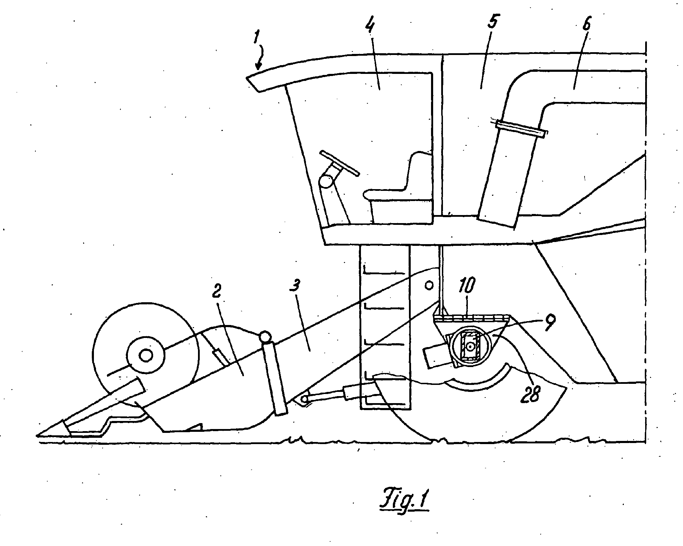

Der in Fig. 1 teilweise dargestellte vordere Bereich eines selbstfahrenden Mähdreschers 1 weist ein Schneidwerk 2, einen Einzugskanal 3, eine Fahrerkabine 4 und einen Korntank 5 mit Entleerungsschnecke 6 auf. Die vorderen, angetriebenen und nicht lenkbaren Laufräder 7,8 sind an der Antriebsachse 9 befestigt. An den Verbindungsstellen 10,11 ist die Antriebsachse 9 mittels Schrauben mit dem Maschinenrahmen 12 verbunden. Am Maschinenrahmen 12 sind weiterhin unter anderem in an sich bekannter und deshalb nicht dargestellter Weise die Dresch- und Reinigungseinrichtung, die Strohschüttler, Antriebs- und Fördereinrichtungen sowie der Antriebsmotor 13 des Mähdreschers 1 angeordnet. Der Antrieb der Laufräder 7,8 erfolgt von einem Hydromotor 14 aus über ein Verteilgetriebe 15 und die Radgetriebe 16,17 zu den Laufrädern 7,8. Das Verteilgetriebe 15 ist etwa in der Mitte der Antriebsachse 9 zwischen den Laufrädern 7,8 angeordnet. Es besteht im Einzelnen aus dem Schaltgetriebe 18 mit angeflanschtem Hydromotor 14 und aus dem Differentialgetriebe 19, die in zwei voneinander getrennten Gehäusen angeordnet sind. Beide Gehäuse sind schraubbar miteinander verbunden. Während das Gehäuse des Differentialgetriebes 19 als tragendes Bauteil ausgebildet ist, hat das Gehäuse des Schaltgetriebes 18 keine tragende Funktion zu erfüllen und kann somit in seinen Abmessungen entsprechend geringer dimensioniert werden. Das Schaltgetriebe 18 und das Differentialgetriebe 19 weisen einen gemeinsamen oder jeweils einen separaten Ölkreislauf auf. An beiden Seiten des Differentialgetriebes 19 sind tragende Achsrohre 20,21 mittels einer Schraubverbindung befestigt. Die Ausgangswellen 22, 23 des Differentialgetriebes 19 sind über eine lösbare Steckverbindung mit Antriebswellen 24,25 verbunden, die innerhalb der Achsrohre 20,21 verlaufen. Die Achsrohre 20,21 sind mit integrierten Bremseinrichtungen 26,27 vorzugsweise mit Lamellenbremsen, versehen. Am bremsseitigen Ende sind die Achsrohre 20,21 mit den Radgetrieben 16,17 ebenfalls durch Schrauben lösbar verbunden. Die Radgetriebe 16,17 sind insbesondere als doppelstufige Planetengetriebe ausgebildet und dienen der Reduzierung der Antriebsdrehzahl für die Laufräder 7,8. Im oberen Bereich der Radgetriebe 16,17 sind Tragkonsolen 28,29 mit Bohrungen 30 und einer zum Maschinenrahmen 12 gerichteten Auflagefläche angeordnet. Durch eine Schraubverbindung erfolgt an den Verbindungsstellen 10,11 der Anschluss der Antriebsachse 9 an den Maschinenrahmen 12. Zwischen den Radgetrieben 16,17 und den Felgen 31 der Laufräder 7,8 sind Tragzapfen 32,33 abgeordnet, die die tragende Verbindung zwischen diesen Bauteilen herstellen. Die Tragzapfen 32,33 sind über eine Schraubverbindung lösbar mit den Radgetrieben 16,17 verbunden. Während die Radgetriebe 16,17 eine einheitliche Ausführung aufweisen, können die Tragzapfen 32,33 in Abhängigkeit von der Größe und der Anzahl der zu adaptierenden Laufräder 7, 8 in ihren Abmessungen unterschiedlich ausgeführt sein. Dadurch ist eine Anpassung der Antriebsachsen 9 an verschiedene Belastungen und Einsatzzwecke auf eine einfache Weise möglich. Die Antriebsverbindung zwischen den Radgetrieben 16,17 und den Felgen 31 erfolgt durch Wellen 34,35, die innerhalb der Tragzapfen 32,33 verlaufen. Über Radmuttern 36 sind die Felgen 31 an den Bolzen 37 der Radflansche 38,39 befestigt. Da der Maschinenrahmen 12 unmittelbar über die Tragkonsolen 28,29 der Radgetriebe Radgetriebe 16,17 mit der Antriebsachse 9 verbunden ist, werden die Funktionen der Drehmomentübertragung und der Lastaufnahme voneinander getrennt und von separaten Baugruppen übertragen, die nur auf die jeweils wirkende Belastung ausgelegt sind. Über die Antriebselemente 40 der Radgetriebe 16, 17 werden keine Biegelasten, sondern nur die wirkenden Drehmomente übertragen. Die Biegelasten der Tragzapfen 32,33 werden im Wesentlichen unter Umgehung der Antriebselemente 40 der Radgetriebe 16,17 in den Maschinenrahmen 12 eingeleitet. Durch die entfallende Einwirkung der Biegemomente können die Radgetriebe 16,17 unter Festigkeitsgesichtspunkten geringer dimensioniert werden, so dass die Herstellungskosten erheblich reduzierbar sind.

### Bezugszeichenliste

- 1: Mähdrescher
- 2: Schneidwerk
- 3: Einzugskanal
- 4: Fahrerkabine
- 5: Korntank
- 6: Entleerungsschnecke
- 7: Laufrad
- 8: Laufrad
- 9: Antriebsachse
- 10: Verbindungsstelle
- 11: Verbindungsstelle
- 12: Maschinenrahmen
- 13: Antriebsmotor
- 14: Hydromotor
- 15: Verteilgetriebe
- 16: Radgetriebe
- 17: Radgetriebe
- 18: Schaltgetriebe
- 19: Differentialgetriebe
- 20: Achsrohr
- 21: Achsrohr
- 22: Ausgangswelle
- 23: Ausgangswelle
- 24: Antriebswelle
- 25: Antriebswelle
- 26: Bremseinrichtung
- 27: Bremseinrichtung
- 28: Tragkonsole
- 29: Tragkonsole
- 30: Bohrungen
- 31: Felgen
- 32: Tragzapfen
- 33: Tragzapfen
- 34: Welle
- 35: Welle
- 36: Radmutter
- 37: Bolzen
- 38: Radflansch
- 39: Radflansch
- 40: Antriebselemente

## Patentansprüche

1. Fahrzeugachse (9) mit zumindest einem Verteilgetriebe (15) und wenigstens einem mit diesem Verteilgetriebe (15) antriebsverbundenen radseitigen Getriebe (16, 17), wobei das wenigstens eine radseitige Getriebe (16, 17) einen Endes mit dem Rahmen (12) des die Fahrzeugachse (9) aufnehmenden Trägerfahrzeugs und anderen Endes mit dem Tragzapfen (32, 33) zumindest eines Laufrades (7, 8) in Wirkverbindung steht und einen Teil des Antriebsstranges des wenigstens einen Laufrades (7, 8) bildet,
**dadurch gekennzeichnet,**
**dass** die Laufräder (7, 8) an der Fahrzeugachse (9) befestigt sind und dass der Rahmen (12) über Tragkonsolen (28, 29) mit dem wenigstens einen radseitigen Getriebe (16, 17) im Antriebsstrang des wenigstens einen Laufrades (7, 8) verbunden ist, so dass die Biegelasten des Tragzapfens (32, 33) im Wesentlichen unter Umgehung von Antriebselementen (40) des wenigstens einen radseitigen Getriebes (16, 17) über die Tragkonsolen (28, 29) in den Rahmen (12) des Fahrzeugs (1) eingeleitet werden.

2. Fahrzeugachse nach Anspruch 1,
**dadurch gekennzeichnet,**
**dass** das wenigstens eine radseitige Getriebe (16, 17) im unmittelbaren Bereich unterhalb der Verbindungsstellen (10, 11) der Antriebsachse (9) zum Maschinenrahmen (12) angeordnet ist.

3. Fahrzeugachse nach einem oder mehreren der vorhergehenden Ansprüche,
**dadurch gekennzeichnet,**
**dass** im oberen Bereich jedes radseitigen Getriebes (16,17) Tragkonsolen (28,29) mit Bohrungen (30) und einer zum Maschinenrahmen (12) gerichteten Auflagefläche angeordnet sind.

4. Fahrzeugachse nach einem oder mehreren der vorhergehenden Ansprüche,
**dadurch gekennzeichnet,**
**dass** zwischen dem jeweiligen radseitigen Getriebe (16,17) und den Felgen (31) der Laufräder (7,8) Tragzapfen (32,33) mit innenliegenden Wellen (34,35) angeordnet sind.

5. Fahrzeugachse nach Anspruch 4,
**dadurch gekennzeichnet,**
**dass** die Tragzapfen (32,33) lösbar mit den Radgetrieben (16,17) verbunden sind.

6. Fahrzeugachse nach einem oder mehreren der vorhergehenden Ansprüche,
**dadurch gekennzeichnet,**
**dass** die jeweiligen Radgetriebe (16,17) eine einheitliche Ausführung und die Tragzapfen (32,33) eine variable Dimensionierung aufweisen.

7. Fahrzeugachse mit zumindest einem Verteilgetriebe und wenigstens einem mit diesem Verteilgetriebe antriebsverbundenem radseitigen Getriebe, wobei das wenigstens eine radseitige Getriebe einenends mit dem Rahmen des die Fahrzeugachse aufnehmenden Trägerfahrzeugs und anderenends mit dem Tragzapfen zumindest eines Laufrades in Wirkverbindung steht und einen Teil des Antriebsstranges des wenigstens einen Laufrades bildet, ,
**dadurch gekennzeichnet,**
**dass** das Verteilgetriebe (15) zumindest zwei voneinander getrennte Gehäuse aufweist, in dessen einem Gehäuse das Schaltgetriebe (18) und in dem anderen Gehäuse das Differentialgetriebe (19) angeordnet ist, wobei nur das Gehäuse des Differentialgetriebes (19) als tragendes Bauteil ausgebildet ist.

8. Fahrzeugachse nach Anspruch 6,
**dadurch gekennzeichnet,**
**dass** das Gehäuse für das Schaltgetriebe (18) lösbar mit dem tragenden Gehäuse für das Differentialgetriebe (19) verbunden ist.

9. Fahrzeugachse nach Anspruch 6 und 7,
**dadurch gekennzeichnet,**
**dass** an beiden Seiten des Gehäuses für das Differentialgetriebe (19) lösbar befestigte Achsrohre (20,21) angeordnet sind.

10. Fahrzeugachse nach Anspruch 8,
**dadurch gekennzeichnet,**
**dass** die Achsrohre (20,21) mit integrierten Bremseinrichtungen (26,27) versehen sind.

11. Fahrzeugachse nach Anspruch 8 und 9,
**dadurch gekennzeichnet,**
**dass** die Achsrohre (20,21) am bremsseitigen Ende mit den Radgetrieben (16,17) lösbar verbunden sind.

12. Fahrzeugachse nach Anspruch 6,
**dadurch gekennzeichnet,**
**dass** das Schaltgetriebe (18) und das Differentialgetriebe (19) einen gemeinsamen oder jeweils einen separaten Ölkreislauf aufweisen.

## Claims

1. A vehicle axle (9) having at least one distribution transmission (15) and at least one wheel-side transmission (16, 17) drivingly connected to said distribution transmission (15), wherein the at least one wheel-side transmission (16, 17) is operatively connected at one end to the frame (12) of the carrier vehicle carrying the vehicle axle (9) and at the other end to the carrier journal (32, 33) of at least one wheel (7, 8) and forms a part of the drive train of the at least one wheel (7, 8),
**characterised in that**
the wheels (7, 8) are secured to the vehicle axle (9) and the frame (12) is connected by way of carrier brackets (28, 29) to the at least one wheel-side transmission (16, 17) in the drive train of the at least one wheel (7, 8) so that the bending loads of the carrier journal (32, 33) are transmitted to the frame (12) of the vehicle (1) by way of the carrier brackets (28, 29) substantially bypassing drive elements (40) of the at least one wheel-side transmission (16, 17).

2. A vehicle axle according to claim 1 **characterised in that** the at least one wheel-side transmission (16, 17) is arranged in the immediate region beneath the connecting locations (10, 11) of the drive axle (9) to the machine frame (12).

3. A vehicle axle according to one or more of the preceding claims **characterised in that** arranged in the upper region of each wheel-side transmission (16, 17) are carrier brackets (28, 29) with bores (30) and a contact surface directed towards the machine frame (12).

4. A vehicle axle according to one or more of the preceding claims **characterised in that** arranged between the respective wheel-side transmission (16, 17) and the rims (31) of the wheels (7, 8) are carrier journals (32, 33) with inwardly disposed shafts (34, 35).

5. A vehicle axle according to claim 4 **characterised in that** the carrier journals (32, 33) are releasably connected to the wheel transmissions (16, 17).

6. A vehicle axle according to one or more of the preceding claims **characterised in that** the respective wheel transmissions (16, 17) are of a unitary structure and the carrier journals (32, 33) are of variable dimensioning.

7. A vehicle axle having at least one distribution transmission and at least one wheel-side transmission drivingly connected to said distribution transmission, wherein the at least one wheel-side transmission is operatively connected at one end to the frame of the carrier vehicle carrying the vehicle axle and at the other end to the carrier journal of at least one wheel and forms a part of the drive train of the at least one wheel,
**characterised in that**
the distribution transmission (15) has at least two mutually separate housings, in one housing of which is arranged the shift transmission (18) and in the other housing of which is arranged the differential transmission (19), wherein only the housing of the differential transmission (19) is in the form of a load-bearing component.

8. A vehicle axle according to claim 6 **characterised in that** the housing for the shift transmission (18) is releasably connected to the load-bearing housing for the differential transmission (19).

9. A vehicle axle according to claim 6 and claim 7 **characterised in that** releasably fixed axle tubes (20, 21) are arranged at both sides of the housing for the differential transmission (19).

10. A vehicle axle according to claim 8 **characterised in that** the axle tubes (20, 21) are provided with integrated braking devices (26, 27).

11. A vehicle axle according to claim 8 and claim 9 **characterised in that** the axle tubes (20, 21) are releasably connected at the brake end to the wheel transmissions (16, 17).

12. A vehicle axle according to claim 6 **characterised in that** the shift transmission (18) and the differential transmission (19) have a common oil circuit or a respective separate oil circuit.

## Revendications

1. Essieu de véhicule (9) comprenant au moins un mécanisme répartiteur (15) et, relié en entraînement à celui-ci, au moins un mécanisme (16,17) situé du côté des roues, ce mécanisme au nombre d'un au moins étant en liaison active par une de ses extrémités avec le châssis (12) du véhicule porteur accueillant l'essieu du véhicule (9) et par l'autre extrémité avec le tourillon porteur (32, 33) d'au moins une roue (7, 8) et constituant une partie de la ligne d'entraînement de la roue (7, 8) au nombre d'une au moins,
cet essieu étant **caractérisé en ce que** les roues (7, 8) sont fixées à l'essieu du véhicule (9) et le châssis (12) est relié par des consoles porteuses (28, 29) au mécanisme (16, 17) au nombre d'une au moins, situé du côté de la roue dans la ligne d'entraînement de la roue (7, 8) au nombre d'un au moins, de sorte que les charges de flexion du tourillon porteur (32, 33) sont introduites par les consoles porteuses (28, 29) dans le châssis (12) du véhicule (1) essentiellement sans passer par les éléments d'entraînement (40) du mécanisme (16, 17), au nombre d'un au moins, situé du côté de la roue.

2. Essieu de véhicule (9) selon la revendication 1, **caractérisé en ce que** le mécanisme (16, 17) situé du côté de la roue, au nombre d'un au moins, est disposé directement en dessous des points de liaison (10, 11) de l'essieu d'entraînement (9) avec le châssis de machine (12).

3. Essieu de véhicule (9) selon une ou plusieurs des revendications précédentes, **caractérisé en ce que** dans la zone supérieure de chaque mécanisme de roue (16, 17) se trouvent des consoles porteuses (28, 29) présentant des perçages (30) et une portée d'appui dirigée vers le châssis de la machine.

4. Essieu de véhicule (9) selon une ou plusieurs des revendications précédentes, **caractérisé en ce qu'**entre chaque mécanisme de roue (16, 17) et la jante (31) de la roue correspondante (7, 8) se trouve un tourillon porteur (32, 33) comportant un arbre intérieur (34, 35).

5. Essieu de véhicule (9) selon la revendication 4, **caractérisé en ce que** chaque tourillon porteur (32, 33) est relié de manière séparable au mécanisme de roue (16, 17) correspondant.

6. Essieu de véhicule (9) selon une ou plusieurs des revendications précédentes, **caractérisé en ce que** les mécanismes de roue (16, 17) ont une même configuration tandis que les tourillons porteurs (32, 33) présentent des dimensions variables.

7. Essieu de véhicule (9) comprenant au moins un mécanisme répartiteur et, relié en entraînement à celui-ci, au moins un mécanisme situé du côté des roues, ce mécanisme au nombre d'un au moins étant en liaison active par une de ses extrémités avec le châssis du véhicule porteur accueillant l'essieu du véhicule et par l'autre extrémité avec le tourillon porteur d'au moins une roue et constituant une partie de la ligne d'entraînement de la roue au nombre d'une au moins,
cet essieu étant **caractérisé en ce que** le mécanisme répartiteur (15) présente au moins deux boîtiers séparés l'un de l'autre, avec dans un boîtier le mécanisme de changement de vitesse (18) et dans l'autre boîtier le mécanisme de différentiel (19), seul ce dernier boîtier (19) étant réalisé comme composant porteur.

8. Essieu de véhicule (9) selon la revendication 6, **caractérisé en ce que** le boîtier, accueillant le mécanisme de changement de vitesse (18) est relié de manière séparable au boîtier porteur accueillant le mécanisme de différentiel (19).

9. Essieu de véhicule (9) selon les revendications 6 et 7, **caractérisé en ce que** sur les deux côtés du boîtier accueillant le différentiel (19) sont fixés, de manière séparable, des tubes d'essieu (20, 21).

10. Essieu de véhicule (9) selon la revendication 8, **caractérisé en ce que** les tubes d'essieu (20, 21) sont équipés de dispositifs de freinage (26, 27) intégrés.

11. Essieu de véhicule (9) selon les revendications 8 et 9, **caractérisé en ce que** chaque tube d'essieu (20, 21), à son extrémité située du côté des freins, est relié de manière séparable au mécanisme de roue (16, 17) correspondant.

12. Essieu de véhicule (9) selon la revendication 6, **caractérisé en ce que** le mécanisme de changement de vitesse (18) et le mécanisme de différentiel (19) présentent un circuit d'huile commun ou des circuits individuels.
